# NEUE EUROPÄISCHE PATENTSCHRIFT

(11) **EP 0 235 091 B2**
(45) Veröffentlichungstag und Bekanntmachung des Hinweises auf die Entscheidung über den Einspruch: **10.05.1995**
(45) Hinweis auf die Patenterteilung: 17.07.1991
(21) Anmeldenummer: 87810105.4
(22) Anmeldetag: 23.02.1987
(51) Int. Cl.: B60J 5/04

(54) **Fahrzeugtür mit Aufprallprofil**
Vehicle door with a shock profile
Porte de véhicule ayant un profilé de choc

(30) Priorität: 25.02.1986 DE 3606024
(43) Veröffentlichungstag der Anmeldung: 02.09.1987
(73) Patentinhaber: ALUSUISSE-LONZA SERVICES AG, 8034 Zürich (CH)
(72) Erfinder: Frank, Simon, D-7708 Tengen (DE); Gitter, Reinhold, D-7702 Gottmadingen (DE); Ebert, Ulrich, D-7700 Singen 15 (DE); Baumann, Karl, D-7709 Hilzingen (DE)
(74) Vertreter: Patentanwälte Breiter + Wiedmer AG

(56) Entgegenhaltungen:
- EP-A- 0 063 325
- DE-A- 1 959 988
- JP-U-83 075 016
- US-A- 3 829 149
- US-A- 4 090 734
- "Aluminium-Taschenbuch", W. Hufnagel, 14. Auflage (1981), Aluminium-Verlag Düsseldorf

## Beschreibung

Die Erfindung betrifft eine Fahrzeugtür nach dem Oberbegriff von Anspruch 1.

Derartige Aufprallprofile werden in den Fahrzeugtüren zur Sicherung der Fahrzeuginsaßen gegen seitliche Verformungskräfte durch Kollision vorgesehen. Aufprallprofile der eingangs erwähnten Art mit I-förmigem Querschnitt. dessen Steg i.w. horizontal innerhalb der Fahrzeugtür verläuft, sind der EP-A-0 063 325 zu entnehmen und haben gegenüber Aufprallträgern aus Blechprofilen oder in Form von Stahlrohren den Vorteil geringeren Gewichtes und -- insbesondere im Hinblick auf die genannten Blechprofile -- einfacherer Herstellung.

Als Mangel des I-Querschnittes hat sich jedoch vor allem dessen -- in den für Fahrzeugtüren einbaufähigen Dimensionen -- geringe Verwindungssteifigkeit erwiesen.

In Kenntnis dieses Standes der Technik hat sich der Erfinder das Ziel gesetzt, eine Fahrzeugtür der eingangs erwähnten Art bzw. ein Aufprallprofil dafür zu schaffen, die/das bei geringem Gewicht ein hohes Maß an Formhaltigkeit bei ausreichendem Kompensationsvermögen für die auftreffende Verformungsenergie aufweist. Zudem sollen Herstellung und Handhabung des Aufprallprofiles sehr einfach sein.

Zur Lösung dieser Aufgabe führen die Merkmale von Anspruch 1. Darüber hinaus hat es sich bei einem Aufprallprofil, dessen Profilwände in an sich bekannter Weise rechtwinkelig zu einer Symmetrieachse verlaufen, als besonders günstig erwiesen, dieser Symmetrieachse eine zwischen den Profilwänden zu dieser parallele weitere Symmetrieachse zuzuordnen.

Dank dieser Massgaben entsteht ein strangpressbares Leichtmetallprofil mit dem bekannten Vorzug geringen Gewichtes, das eine unverhältnismässig hohe Verwindungssteifigkeit anzubieten hat. Das Vorhandensein zweier Symmetrieachsen führt darüber hinaus zu einer Verbesserung der Herstellung aus dem Strangpressprofil und zu einer Verminderung des Abfalles dabei; das Aufprallprofil wird üblicherweise an jedem Ende durch einen Fräsvorgang so abgeschrägt, dass die eine Profilwand einen axial abkragenden Streifen mit einer der Wanddicke entsprechenden Stirnkante bildet. Dieser Streifen nimmt wenigstens eine Bohrung auf, durch welche die Befestigungsschrauben geführt werden, oder er wird mit dem Türrahmen verschweisst. Dieses Abschrägen hat bei asymmetrischen Strangpressprofilen naheliegenderweise einen vermehrten Abfall zur Folge. Die Aufprallprofile können ohne derartigen Abfall durch Schrägschnitt hergestellt werden; die Schnittebene des einen Profilendes ist gleichzeitig Schnittebene eines weiteren Aufprallprofiles; dabei wird der Schrägschnitt unmittelbar bis zur Stirnkante geführt.

Die Verwindungssteifigkeit des erfindungsgemässen Aufprallprofiles in Kastenform mit verhältnismässig starken Profilwänden und dünnen, den Abstand haltenden Querwänden ist -- wie Versuche gezeigt haben -- unverhältnismässig hoch.

Ein besonders günstiger Querschnitt für das Aufprallprofil ergibt sich dann, wenn die Profilwände jeweils um ein Mass nach aussen abkragen, welches etwa einem Fünftel bis Sechstel der Querschnittsbreite entspricht. Die so entstehenden Wulstabschnitte verzögern beim Aufprall das Entstehen von Verformungen an den Querwänden.

Bei einem bevorzugten Ausführungsbeispiel ist die Querschnittsbreite etwa so gross wie die Gesamthöhe des Aufprallprofiles.

Die Profilkammer des erfindungsgemässen Aufprallprofils weist bevorzugt einen quadratischen Querschnitt auf oder einen mit einer angenähert ovalen Kontur. Bei den erfindungsgemässen Profilquerschnitten hat es sich als vorteilhaft herausgestellt, dass sich die Querwand von einer Querachse des Querschnittes erweitert und unter Bildung gekrümmter Konturen in die Profilwand übergeht, was ein Abreissen am Uebergang der Querwand in die Profilwand in jedem Falle hintanhält. So kann die Querwand -- wie beschrieben -- verhältnismässig dünn sein, beispielsweise etwa der halben Dicke der Profilwand entsprechen.

Nach einer weiteren Variante der Erfindung ist an wenigstens eine der Profilwände ein in die Profilkammer einragender Mittelsteg angeformt, welcher die Festigkeit im Bereich der bekannten Symmetrieachse erhöht.

Zur Vermeidung eines Stauchens der Wulstabschnitte der in Einbaulage des Aufprallprofiles äusseren Profilwand sind deren Wulstabschnitte beidseits in Abstand zur Profillängsmitte unterbrochen.

An dem Aufprallprofil der beschriebenen Form entsteht bei Herstellung des geneigten Schnittes am Profilende eine Schrägfläche U-förmiger Gestalt aus der in Einbaulage äusseren Profilwand und den beiden anschliessenden Querwänden. Letztere können nach einern Weiterbildung der Erfindung zum benachbarten Wulstabschnitt der anderen Profilwand hin auswärts gebogen sein und damit zu einer weiteren Verstärkung am Profilende beitragen.

Im Rahmen einer Weiterbildung der Erfindung liegt es auch, in die Profilkammer zumindest ein Zusatzprofil einzulegen, welches wenigstens den Innenflächen der beiden Profilwände anliegt und das eigentliche Aufprallprofil erheblich zu verstärken vermag. Der Einbau dieses Zusatzprofiles erlaubt es, den Querschnitt des Aufprallprofiles selbst erheblich zu verringern bzw. dieses in seiner Sicherungsfunktion wesentlich zu verbessern. Voraussetzung für die Anbringung dieses Zusatzprofiles ist die erfindungsgemässe Profilkammer.

Grundsätzlich ist es denkbar, in diese beschriebene Profilkammer Zusatzprofile beliebiger Querschnitte einzusetzen, jedoch hat sich als besonders günstig ein Rohr kreisförmigen Querschnittes ergeben, welches in eine quadratische Profilkammer eingelegt wird und dann sowohl an den Profilwänden als auch an den Querwänden anliegt.

Die Länge dieses Zusatzprofiles ist in jedem Falle geringer als die Länge des unverformten Teiles des Aufprallprofiles, also des Abstandes zwischen den abgeschrägten Profilenden.

Es entsteht ein Aufprallprofil und damit eine Fahrzeugtür, welche den aufgabengemässen Forderungen in bestechender Weise gerecht wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: die Frontansicht einer Fahrzeugtür mit darin vorgesehenem Aufprallprofil;
- Fig. 2: ein gegenüber Fig. 1 vergrößertes Aufprallprofil in geschnittener Schrägsicht;
- Fig. 3: den gegenüber den natürlichen Maßen vergrößerten Querschnitt eines anderen Aufprallprofiles;
- Fig. 4: eine Seitenansicht des Aufprallprofiles mit Profilenden zu zwei Ausführungsformen;
- Fig. 5: die Draufsicht auf einen Teil der Fig. 4;
- Fig. 6: die Draufsicht auf die in Fig. 4 rechts dargestellte Ausführungsform;
- Fig. 7: die gegenüber Fig. 4 bis 6 vergrößerte Wiedergabe eines Profilendes;
- Fig. 8: den Querschnitt durch Fig. 7 nach deren Linie VIII - VIII;
- Fig. 9: den Querschnitt durch eine weitere Ausführungsform eines Aufprallprofiles, welcher gegenüber der in
- Fig. 10: dargestellten Seitenansicht dieses Aufprallprofiles vergrößert ist;
- Fig. 11: ein Kraft-Weg-Diagramm zu Belastungsversuchen.
In einer Fahrzeugtür 10 für einen aus Gründen der Übersichtlichkeit nicht wiedergegebenen Personenkraftwagen verläuft innerhalb eines geschlossenen unteren Türkastens 11 ein strangepreßtes Aluminiumprofil 20 als Aufprallträger. Dessen Abstand i von der oberen Kante 14 des Türkastens 11 ist größer als die Absenktiefe einer in einem Rahmen 12 erkennbaren Fensterscheibe 13.

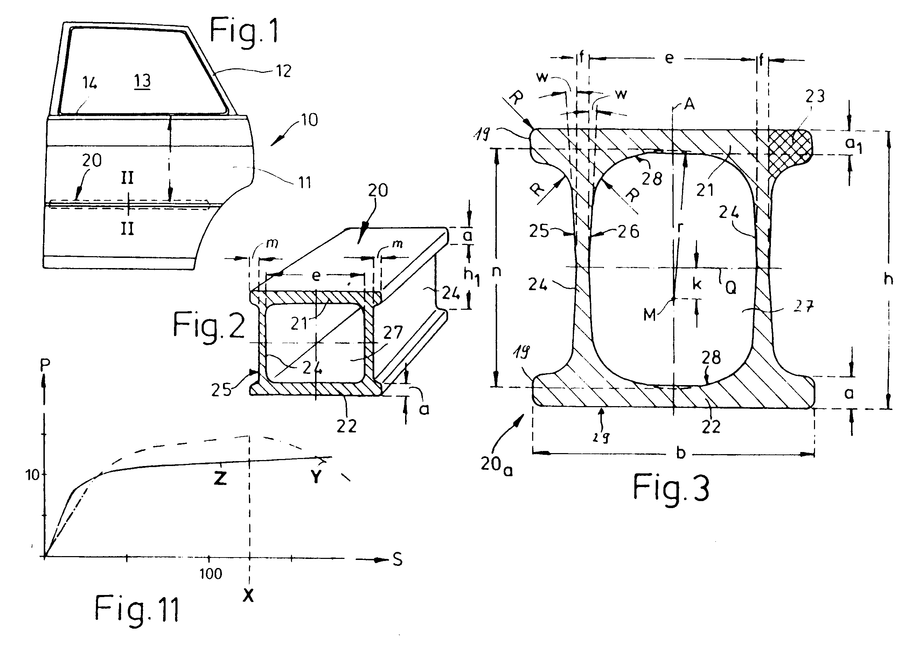

Das Aufprallprofil 20 weist gemäß Fig. 2 querschnittlich zwei in Abstand hₗ von beispielsweise 24 mm zueinander parallele Profilwände 21, 22 einer Dicke a von hier 4 mm auf, die durch zwei schmale Querwände 24 zu einem Hohlprofil mit Profilkammer 27 ergänzt sind. Die Kammerbreite e beträgt hier 30 mm.

Die Profilwände 21, 22 kragen beidseits um ein Maß m über die Außenflächen 25 der Querwände 24 hinaus und bilden so Wulstabschnitte 23 (siehe Fig. 3, oben rechts).

Beim Aufprallprofil 20ₐ nach Fig. 3 einer Gesamthöhe h von beispielsweise 27,4 mm, einer Gesamtbreite b von 38 mm und einer Höhe a der Profilwandlängskanten 19 von 4,7 mm ist deutlich zu erkennen, daß die senkrecht zu den Querwänden 24 gerichtete Querachse Q ebenso eine Symmetrieachse für den Querschnitt bildet wie die sie kreuzende Hauptachse A. Auf letzterer liegt in einem Abstand k (etwa 5 mm) von der Querachse Q der Mittelpunkt M für einen Radius r (etwa 20 mm), welcher die innere Querschnittskontur der hier eine entsprechend gekrümmte Innenseite 28 anbietenden Profilwände 21, 22 bestimmt; deren mittlere Dicke aₗ beträgt hier 3 mm, so daß eine lichte Kammerhöhe n von etwa 32 mm entsteht.

An beide Profilwände 21, 22 stoßen die Querwände 24 mittleren inneren Abstands e von 22,4 mm -- einer Dicke f von hier 1,8 mm an der Querachse Q -- mit gerundeten Übergängen an - die diesbezüglichen Radien sind in Fig. 3 mit R bezeichnet. Die Außenfläche 25 und die Innenfläche 26 der Querwand 24 sind von jenem Übergang bis zur Querachse Q in Winkeln w von 2,5° zueinander geneigt, so daß insoweit ein sich zur Querachse Q hin konisch verjüngender Querschnitt der Querwänd 24 entsteht.

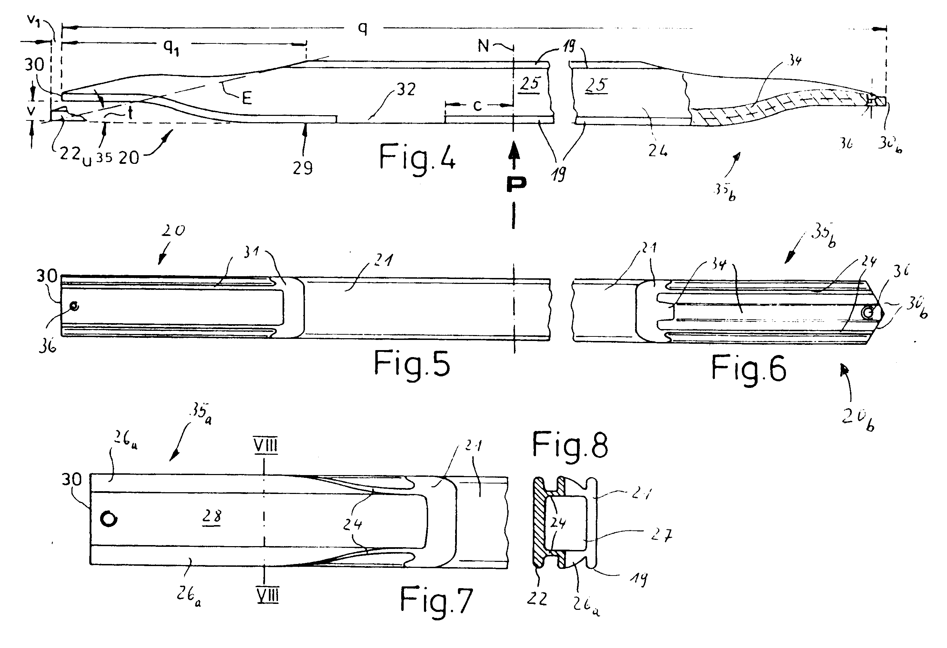

Das Aufprallprofil 20 weist gemäß Fig. 4 für den Einbau in eine Vordertür eine beispielsweise Gesamtlänge q von 974 mm auf und ist an beiden Enden jeweils in einer Linie E abgeschrägt, welche mit der Profilunterseite 29 einen spitzen Winkel t einschließt. Durch diesen schräggelegten Schnitt entsteht eine Stirnkante 30, die aus der bei 22ᵤ angedeuteten ursprünglichen Kontur der unteren Profilwand 22 in einem Versetzungsmaß v von hier 12,2 mm aufwärts versetzt ist - dabei entsteht im rechten Winkel dazu ein Verkürzungsmaß vₗ bei näherungsweise S-förmigem Verlauf der unteren Profilwand 22 an diesem abgeschrägten Abschnitt einer Länge qₗ von etwa 148 mm. In Draufsicht nach Fig. 5 ist die durch den beschriebenen Schnittvorgang entstehende Schrägfläche 31 zu erkennen, die sich aus Schnittflächen der Querwände 24 und der oberen Profilwand 21 zusammensetzt sowie U-förmiger Gestalt ist.

Auch verdeutlicht Fig. 4, daß in Abstand c zur Profillängsmitte N in Längsrichtung ein Teil des unteren Wulstabschnittes 23 herausgetrennt ist, so daß die Querwand 24 an diesem Ausschnitt 32 bis zur Profilunterseite 29 reicht, um in Falle einer Verbiegung des Aufprallprofiles 20 an der -- bei einer auftreffenden Kraft P i.w. beanspruchten -- Profillängsmitte N ein Stauchen der beidseitig anschliessenden Wulstabschnitte 23 zu unterbinden.

Die in Fig. 4 durch einen Pfeil P angedeutete Kraftrichtung lässt die Lage des Aufprallprofiles 20 in der Türkonstruktion erkennen: Die Profilwand 21 ist dem Wageninnenraum zugekehrt, die Profilwand 22 nach aussen gerichtet. Die beschriebenen, in Fig. 4 für zwei unterschiedliche Ausführungen dargestellten Profilenden 35, 35_{b} werden in nicht erkennbare Längssicken des Türrahmens eingelegt und mittels Bohrungen 36 durchsetzender Schrauben befestigt.

Das in Fig. 6 -- und auch darüber in Fig. 4, rechts -- dargestellte Profilende 35_{b} eines Profiles 20_{b} zeigt eine pfeilartig ausgebildete Stirnkante 30_{b} sowie jeweils eine -- an beide Profilwände 21, 22 angeformte -- Mittelleiste 34; beide Mittelleisten 34 sind innerhalb der Profilkammer 27 einander zugekehrt.

Bei Profilende 35ₐ der Fig. 7, 8 ist der nach dem Schnittvorgang verbliebene untere Teile der Querwand 24 so nach aussen umgebogen, dass ein Teil der Innenfläche 26 nunmehr in Fortsetzung der oberen -- bzw. in Einbaulage inneren - -Profilwand 21 zu dieser etwa parallel verläuft (26ₐ in Fig. 7, 8).

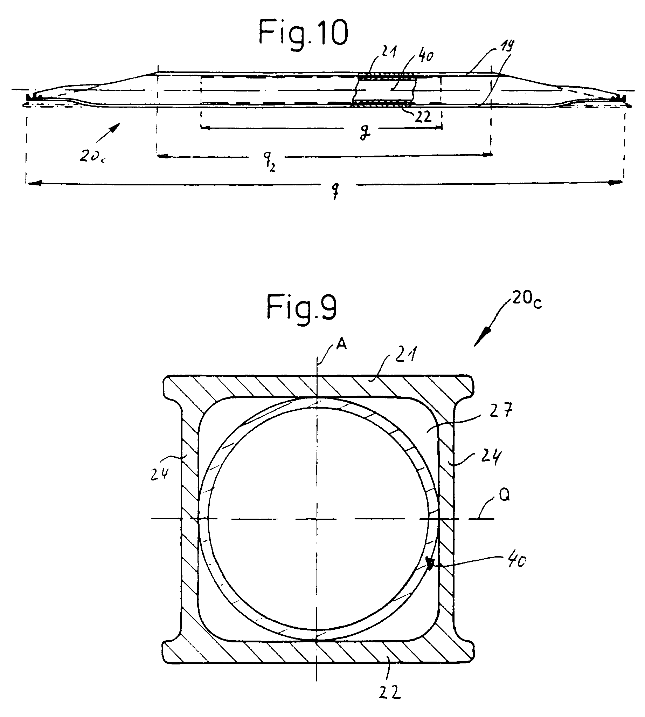

Das Profil 20_{c} der Fig. 9, 10 bietet eine quadratische Profilkammer 27 an, in welche ein Rohrprofil 40 eingeschoben ist. Dessen Länge g ist geringer als die Länge q₂ des nach dem Abschräg- oder Schnittvorgang unveränderten Abschnittes des Aufprallprofils 20_{c}.

Bei nicht dargestellten Ausführungsbeispielen sind in die Profilkammer 27 Zusatzprofile anderen -- als kreisförmigen -- Querschnittes eingeführt.

Das Kraft-Weg-Diagramm nach Fig. 11 zeigt über dem Durchbiegungsweg S in mm in Abhängigkeit von der Druckkraft P (kN) eine ausgezogene Kurve Z mit dem Ergebnis eines Belastungstestes eines an den Bohrungen 36 widergelagerten Aufprallprofils 20 bis 20_{c} der oben beschriebenen Länge q bei mittiger Beaufschlagung mit der Kraft P von etwa 1,4 Tonnen eines Druckkörpers, bei einer Eindrückgeschwindigkeit unter 12,7 mm/sec. Die Kurve y gibt die entsprechende Charakteristik für Stahlrohre -- als übliche Aufprallprofile -- wieder - Kurve y läßt an der Vertikalen x ein Abknicken zur Weg-Achse S erkennen.

## Patentansprüche

1. Fahrzeugtür (10), insbesondere Tür von Personenkraftwagen, mit wenigstens einem Aufprallprofil (20), das aus einer Leichtmetallegierung auf dem Wege des Strangpressens einstückig hergestellt und in der Fahrzeugtür (10) in Fahrtrichtung verlaufend beidends so festlegbar ist, dass eine Profilwand (21) des Aufprallprofils (20) dem Wageninnenraum zugeordnet ist und eine dazu in Abstand vorgesehene zweite Profilwand (22) des Aufprallprofils (20) nach aussen gerichtet ist,
dadurch gekennzeichnet,
dass die innere Profilwand (21) und die aussere Profilwand (22) des Aufprallprofils (20) mit einem Paar sie einstückig verbindender Querwände (24) eine Profilkammer (27) einschliessen, wobei die innere Profilwand (21) und die aussere Profilwand (22) jeweils beidends unter Bildung von Wulstabschnitten (23) über die Querwände hinauskragen.

2. Fahrzeugtür nach Anspruch 1 mit einem Aufprallprofil, dessen Profilwände rechtwinkelig zu einer Symmetrieachse verlaufen, dadurch gekennzeichnet, dass der Symmetrieachse (A) eine zwischen den Profilwänden (21, 22) zu diesen parallele weitere Symmetrieachse (Q) zugeordnet ist.

3. Fahrzeugtür nach Anspruch 1 oder 2, dadurch gekennzeichnet, dass die Profilwände (21, 22) jeweils um ein Mass (m) abkragen, welches etwa einem Fünftel bis Sechstel der Querschnittsbreite (b) entspricht.

4. Fahrzeugtür nach einem der Ansprüche 1 bis 3, dadurch gekennzeichnet, dass die Dicke (f) der Querwand (24) des Aufprallprofils (20) etwa der halben Dicke (a₁) der Profilwand (21 bzw. 22) entspricht.

5. Fahrzeugtür nach einem der Ansprüche 1 bis 4, dadurch gekennzeichnet, dass an wenigstens eine Profilwand (21, 22) ein in die Profilkammer (27) ragender Mittelsteg (34) angeformt ist.

6. Fahrzeugtür nach einem der Ansprüche 1 bis 5, dadurch gekennzeichnet, dass der Wulstabschnitt (23) in Abstand (c) zur Längsmitte (N) des Aufprallprofiles (20) je eine an der Querwand (24) endende Randausnehmung (32) aufweist.

7. Fahrzeugtür mit einem Aufprallprofil nach einem der Ansprüche 1 bis 6, das an jedem Ende entlang einer geneigten Ebene (E) abgeschrägt ist, wobei eine Profilwand (22) eine Stirnkante (30) bildet, dadurch gekennzeichnet, dass die andere Profilwand (21) sowie beide an sie anschliessenden Querwände (24) eine geneigte, an der Stirnkante (30) auslaufende U-förmige Schnittfläche (31) bilden.

8. Fahrzeugtür nach Anspruch 7, dadurch gekennzeichnet, dass der verbleibende Teil der Querwand (24) zum benachbarten Wulstabschnitt (23) hin gebogen ist.

9. Fahrzeugtür nach einem der Ansprüche 1 bis 8, dadurch gekennzeichnet, dass in die Profilkammer (27) des Aufprallprofils (20, 20ₐ bis 20_{c}) ein zumindest die Innenflächen (28) beider Profilwände (21, 22) berührendes Zusatzprofil (40), vorzugsweise ein Rohr, eingelegt ist.

10. Fahrzeugtür nach Anspruch 9, dadurch gekennzeichnet, dass die Länge (g) des Zusatzprofiles (40) geringer ist als die Länge (q₂) des unverformten Abschnittes des Aufprallprofiles (20_{c}).

## Claims

1. Vehicle door (10), in particular a door for passenger vehicles, with at least one shock profile (20) constructed all of a piece by extrusion of light metal alloy, which can be mounted at both ends inside the vehicle door aligned with the direction of travel, so that one profile wall (21) faces the interior of the vehicle and a second profile wall (22) is disposed to it at a distance faced outward,
characterised in that
together with a couple of transverse walls (24) which join them together all of a piece, the inner profile wall (21) and the outer profile wall (22) enclose a profile chamber (27), whereby the inner profile wall (21) and the outer profile wall (22) jut out at both ends beyond the transverse walls, so forming flanged sections (23).

2. Vehicle door with shock profile as per claim 1, the profile walls of which run at right angles to an axis of symmetry, characterised in that the axis of symmetry (A) has another corresponding axis of symmetry (Q) which runs between the profile walls (21, 22) in parallel to them.

3. Vehicle door as per claims 1 or 2, characterised in that the profile walls (21, 22) each jut out by an amount (m) corresponding to approx. one fifth to one sixth of the width of the cross section (b).

4. Vehicle door as per one of claims 1 to 3, characterised in that the thickness (f) of the transverse wall (24) of the shock profile (20) corresponds to circa half the thickness (a₁) of the profile wall (21 or 22).

5. Vehicle door as per one of claims 1 to 4, characterised in that a centre selvedge (34) is tip-stretched along at least one profile wall (21, 22), and juts out into the profile chamber (27).

6. Vehicle door as per one of claims 1 to 5, characterised in that the flanged section (23) has a recess (32) in its edge at a distance (c) from the longitudinal midpoint (N) of the shock profile (20), which recess ends at each of the transverse walls (24).

7. Vehicle door with a shock profile as per one of claims 1 to 6, which is tapered at each end along an angled plane (E), as a result of which one profile wall (22) forms a front edge (30), characterised in that the other profile wall (21) and the two adjoining transverse walls (24) form an angled U-shaped intersecting plane (31) which tapers off into the front edge (30).

8. Vehicle door as per claim 7, characterised in that the remaining part of the transverse wall (24) is curved outwards towards the neighbouring flanged section (23).

9. Vehicle door as per one of claims 1 to 8, characterised in that at least one additional profile (40), preferably a tube, is inserted into the profile chamber (27) of the shock profile (20, 20ₐ to 20_{c}) in such a way that it touches at least the inner surfaces (28) of the two profile walls (21, 22).

10. Vehicle door as per claim 9, characterised in that the length (g) of the additional profile (40) is less than the length (q₂) of the unchanged section of the shock profile (20_{c}).

## Revendications

1. Porte de véhicule (10), notamment pour véhicule automobile personnel, comprenant au moins un profilé de renfort (20) fabriqué tout d'une pièce par filage en alliage léger et qui, s'étendant dans la direction de la marche, peut être fixé dans la porte de véhicule à ses deux extrémités de sorte qu'une semelle (21) du profilé est dirigée vers le volume intérieur du véhicule et une deuxième semelle (22) du profilé y est disposée à un écartement vers l'extérieur,
caractérisée
en ce que la semelle (21) intérieure du profilé et la semelle (22) extérieure du profilé enferment, en combinaison avec une paire de parois transversales (24) qui les relient tout d'une pièce, une chambre de profilé (27), où la semelle (21) intérieure du profilé et la semelle (22) extérieure du profilé débordent à ses deux extrémités au-delà des parois transversales en formant des bourrelets (23).

2. Porte de véhicule selon la revendication 1, munie d'un profilé de renfort dont les semelles du profilé s'étendent perpendiculairement à un axe de symétrie, caractérisé en ce qu'à l'axe de symétrie (A), est associé un autre axe de symétrie (Q) s'étendant entre les semelles (21, 22) du profilé, et qui est parallèle à ces dernières.

3. Porte de véhicule selon la revendication 1 ou 2, caractérisée en ce que les semelles (21, 22) du profilé débordent d'une dimension (m) qui correspond à peu près à un cinquième ou un sixième de la largeur (b) de la section.

4. Porte de véhicule selon une des revendications 1 à 3, caractérisée en ce aux l'épaisseur (f) de la paroi transversale (24) du profilé de renfort (20) correspond à peu près à la moitié de l'épaisseur (a₁) de la semelle (21 ou 22) du profilé.

5. Porte de véhicule selon une des revendications 1 à 4, caractérisée en ce que sur au moins une semelle (21, 22) du profilé est formée une nervure médiane (34) qui fait saillie dans la chambre (27) du profilé.

6. Porte de véhicule selon une des revendications 1 à 5, caractérisée en ce que le bourrelet (23) présente, a une distance (c) du milieu longitudinal (N) du profilé de renfort (20), un évidement (32) qui se termine au droit de la paroi transversale (24).

7. Porte de véhicule selon une des revendications 1 à 6, équipée d'une profilé de renfort que est chanfreiné à chaque extrémité selon un plan incliné (E), une semelle (22) du profilé formant un chant frontal (30), caractérisée en ce que l'autre semelle (21) du profilé, ainsi que les deux parois transversales (24) qui s'y raccordent, forment une surface de coupe inclinée (31) en forme de U qui se termine au niveau du chant frontal (30).

8. Porte de véhicule selon la revendication 7, caractérisée en ce que la partie restante de la paroi transversale (24) est repliée vers le bourrelet (23) adjacent.

9. Porte de véhicule selon une des revendications 1 à 8, caractérisée en ce que, dans la chambre (27) du porfilé de renfort (20, 20ₐ à 20_{c}), est enfilé un porfilé additionnel (40), de préférence un tube, qui est en contact au moins avec les surfaces intérieures (28) des deux semelles (21, 22) du porfilé.

10. Porte de véhicule selon la revendication 9, caractérisée en ce que la longueur (g) du porfilé additionnel (40) est plus petite que la longueur (q₂) du segment non déformé du porfilé de renfort (20_{c}).
